# EUROPEAN PATENT APPLICATION

(11) **EP 4 651 261 A1**
(43) Date of publication of application: **19.11.2025**
(21) Application number: 24775097.9
(22) Date of filing: 06.03.2024
(51) Int. Cl.: H01M 10/42, G01N 27/04, H01M 4/02

(54) **ELECTRODE PERFORMANCE ANALYSIS APPARATUS AND OPERATION METHOD THEREOF**

(30) Priority: 22.03.2023 KR 20230037624
(71) Applicant: LG Energy Solution, Ltd., Seoul 07335 (KR)
(72) Inventor: PARK, Joo Nam, Daejeon 34122 (KR); SHIN, Dong Mok, Daejeon 34122 (KR); KIM, Hyeong Seok, Daejeon 34122 (KR); KO, Yo Han, Daejeon 34122 (KR); PARK, Moon Soo, Daejeon 34122 (KR); SHIN, Dong Oh, Daejeon 34122 (KR); KIM, Hak Yoon, Daejeon 34122 (KR)
(74) Representative: Goddar, Heinz J.
(86) International application number: PCT/KR2024/002869
(87) International publication number: WO 2024/196049

(57) **Abstract**

An electrode performance analysis apparatus according to an embodiment disclosed herein includes a first modeling unit configured to three-dimensionally (3D) model an initial electrode structure, an obtaining unit configured to obtain a first parameter comprising at least one of an active material particle size, a filling rate, or a filling rate from each of a plurality of lattice cells in the initial electrode structure, a second modeling unit configured to 3D model a reference electrode structure based on the first parameter, and an analyzing unit configured to analyze performance of the reference electrode structure.

## Description

### CROSS-REFERENCE TO RELATED APPLICATIONS

This application claims priority to and the benefit of Korean Patent Application No. 10-2023-0037624 filed in the Korean Intellectual Property Office on March 22, 2023, the entire content of which is incorporated herein by reference.

### TECHNICAL FIELD

Embodiments disclosed herein relate to an electrode performance analysis apparatus and an operating method thereof.

### BACKGROUND

Recently, research and development of secondary batteries have been actively performed. Herein, the secondary batteries, which are chargeable/dischargeable batteries, may include all of conventional nickel (Ni)/cadmium (Cd) batteries, Ni/metal hydride (MH) batteries, etc., and recent lithium-ion batteries. Among the secondary batteries, a lithium-ion battery has a much higher energy density than those of the conventional Ni/Cd batteries, Ni/MH batteries, etc. Moreover, the lithium-ion battery may be manufactured to be small and lightweight, such that the lithium-ion battery has been used as a power source of mobile devices, and recently, a use range thereof has been extended to power sources for electric vehicles, attracting attention as next-generation energy storage media.

As the performance of the secondary batteries is determined by various variables, research is actively underway to develop technology for implementing a structure of a secondary battery manufactured to study performance change with variables in a virtual world in a computer through digital twin technology and predicting performance change with a design parameter value based on the implementation.

As an example of such a digital twin work, there is a method of three-dimensionally (3D) modeling an electrode structure based on a representative elementary volume (REV) capable of representing characteristics of an actual electrode volume. Herein, to improve the reliability of electrode performance analysis through the modeled electrode structure, a similarity between the modeled electrode structure and the actual electrode needs to be enhanced. To this end, it is necessary to systemize a method of setting an REV for electrode structure modeling.

The background description provided herein is for the purpose of generally presenting context of the disclosure. Unless otherwise indicated herein, the materials described in this section are not prior art to the claims in this application and are not admitted to be prior art, or suggestions of the prior art, by inclusion in this section

### SUMMARY

Embodiments disclosed herein aim to provide an electrode performance analysis apparatus and an operating method thereof in which an REV setting method systemized to 3D model an electrode structure having a high degree of matching to an actual electrode may be provided.

Embodiments disclosed herein aim to provide an electrode performance analysis apparatus and an operating method thereof in which a geometric parameter calculation method capable of analyzing performance of an electrode from a 3D-modeled electrode structure may be provided.

Technical problems of the embodiments disclosed herein are not limited to the above-described technical problems, and other unmentioned technical problems would be clearly understood by one of ordinary skill in the art from the following description.

An electrode performance analysis apparatus according to an embodiment disclosed herein includes a first modeling unit configured to three-dimensionally (3D) model an initial electrode structure, an obtaining unit configured to obtain a first parameter including at least one of an active material particle size, a filling rate, or a filling rate from each of a plurality of lattice cells in the initial electrode structure, a second modeling unit configured to 3D model a reference electrode structure based, at least in part, on the first parameter, and an analyzing unit configured to analyze performance of the reference electrode structure.

In the electrode performance analysis apparatus according to an embodiment disclosed herein, the first modeling unit may 3D model the initial electrode structure using variables corresponding to a volume, the active material particle size, and a filling rate from each of a plurality of lattice cells.

In the electrode performance analysis apparatus according to an embodiment disclosed herein, the second modeling unit may be further configured to determine a representative elementary volume (REV) based on the first parameter, and 3D model the reference electrode structure based, at least in part, on the REV.

In the electrode performance analysis apparatus according to an embodiment disclosed herein, the second modeling unit may be further configured to determine a reference lattice cell among the plurality of lattice cells based on the first parameter, and determine a volume of the reference lattice cell as the REV.

In the electrode performance analysis apparatus according to an embodiment disclosed herein, the second modeling unit may be further configured to identify one or more lattice cells satisfying a designated condition among the plurality of lattice cells and determine a lattice cell having a minimum volume among the one or more lattice cells as the reference lattice cell, in which the designated condition includes at least one of a first condition that evaluates whether the first parameter is within a designated range or a second condition that evaluates whether the first parameter includes a designated value.

The electrode performance analysis apparatus according to an embodiment disclosed herein may further include a verifying unit configured to verify reliability of the reference electrode structure based on a domain volume/particle volume (D/P) value obtained by dividing the volume of the reference electrode structure by a volume of an active material in the reference electrode structure.

In the electrode performance analysis apparatus according to an embodiment disclosed herein, the verifying unit may be further configured to verify that the reference electrode structure is reliable in response to determining that a number of active material particles in the reference electrode structure is greater than the D/P.

In the electrode performance analysis apparatus according to an embodiment disclosed herein, the analyzing unit may be further configured to analyze performance related to at least one of an electrical conductivity, an ionic conductivity, or an active material reaction area of the reference electrode structure.

An electrode performance analysis method according to an embodiment disclosed herein includes three-dimensionally (3D) modeling an initial electrode structure, obtaining a first parameter including at least one of an active material particle size, a filling rate, or a filling rate from each of a plurality of lattice cells in the initial electrode structure, 3D modeling a reference electrode structure based, at least in part, on the first parameter, and analyzing performance of the reference electrode structure.

In the electrode performance analysis method according to an embodiment disclosed herein, the 3D modeling of the initial electrode structure may include determining a representative elementary volume (REV) basedon the first parameter and 3D modeling the reference electrode structure based, at least in part, on the REV.

In the electrode performance analysis method according to an embodiment disclosed herein, the determining of the REV may include determining a reference lattice cell among the plurality of lattice cells, based on the first parameter and determining a volume of the reference lattice cell as the REV.

In the electrode performance analysis method according to an embodiment disclosed herein, the determining of the reference lattice cell may include identifying one or more lattice cells satisfying a designated condition among the plurality of lattice cells and determining a lattice cell having a minimum volume among the one or more lattice cells as the reference lattice cell, in which the designated condition may include at least one of a first condition that evaluates whether the first parameter is within a designated range or a second condition that evaluates whether the first parameter includes a designated value.

The electrode performance analysis method according to an embodiment disclosed herein may include verifying reliability of the reference electrode structure based on a domain volume/particle volume (D/P) value obtained by dividing the volume of the reference electrode structure by a volume of an active material in the reference electrode structure.

In the electrode performance analysis method according to an embodiment disclosed herein, the verifying the reliability of the reference electrode structure may include verifying that the reference electrode structure is reliable in response to determining that a number of active material particles in the reference electrode structure is greater than the D/P.

In the electrode performance analysis method according to an embodiment disclosed herein, analyzing the performance of the reference electrode structure may include analyzing performance related to at least one of an electrical conductivity, an ionic conductivity, or an active material reaction area of the reference electrode structure.

According to embodiments disclosed herein, by systematically setting an REV through a parameter obtained from a plurality of lattice cells included in an initial electrode structure, an electrode structure having a high degree of matching to an actual electrode may be 3D modeled.

According to embodiments disclosed herein, a geometric parameter capable of analyzing performance of an electrode may be calculated from a 3D-modeled electrode structure.

Moreover, various effects recognized directly or indirectly from the disclosure may be provided.

### BRIEF DESCRIPTION OF THE DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawings.
FIG. 1 is a block diagram of an electrode performance analysis apparatus according to an embodiment.
FIG. 2 is a view showing an initial electrode structure that is 3D-modeled by an electrode performance analysis apparatus, according to an embodiment.
FIG. 3 is a graph for describing an example of determining, by an electrode performance analysis apparatus, a reference lattice cell among a plurality of lattice cells to set an REV, according to an embodiment.
FIG. 4 is a graph for describing an example of determining, by an electrode performance analysis apparatus, a reference lattice cell among a plurality of lattice cells to set an REV, according to an embodiment.
FIG. 5 is a graph for describing an example of determining, by an electrode performance analysis apparatus, a reference lattice cell among a plurality of lattice cells to set an REV, according to an embodiment.
FIG. 6 is a view showing a reference electrode structure that is 3D-modeled based on a set REV by an electrode performance analysis apparatus, according to an embodiment.
FIG. 7 is a flowchart of operations of an electrode performance analysis apparatus according to an embodiment.
FIG. 8 is a flowchart of operations of an electrode performance analysis apparatus according to an embodiment.

### DETAILED DESCRIPTION

Hereinafter, various embodiments of the present disclosure will be disclosed with reference to the accompanying drawings. However, the description is not intended to limit the present disclosure to particular embodiments, and it should be construed as including various modifications, equivalents, and/or alternatives according to the embodiments of the present disclosure.

It should be appreciated that various embodiments of the present document and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise.

As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. Such terms as "1^{st}", "2^{nd}," "first", "second", "A", "B", "(a)", or "(b)" may be used to simply distinguish a corresponding component from another, and does not limit the components in other aspect (e.g., importance or order), unless mentioned otherwise.

Herein, it is to be understood that when an element (e.g., a first element) is referred to, with or without the term "operatively" or "communicatively", as "connected with", "coupled with", or "linked with", or "coupled to" or "connected to" to another element (e.g., a second element), it means that the element may be connected with the other element directly (e.g., wiredly), wirelessly, or via a third element.

According to an embodiment of the disclosure, a method according to various embodiments of the disclosure disclosed herein may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store, or between two user devices directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

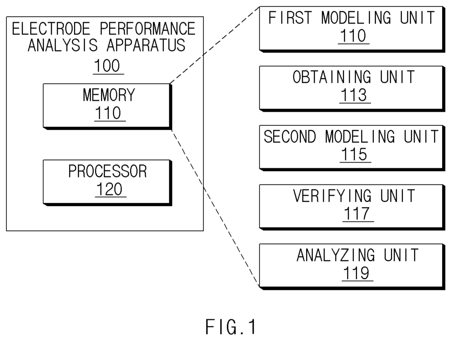

FIG. 1 is a block diagram of an electrode performance analysis apparatus according to an embodiment.

According to an embodiment, an electrode performance analysis apparatus 100 may include a memory 110 and a processor 120. According to an embodiment, the electrode performance analysis apparatus 100 shown in FIG. 1 may further include at least one component (e.g., a display, an input device, or an output device) in addition to components shown in FIG. 1.

According to an embodiment, the memory 110 may include a volatile and/or a nonvolatile memory.

In an embodiment, the memory 110 may store data used by at least one component (e.g., the processor 120) of the electrode performance analysis apparatus 100. For example, the data may include software (or an instruction related thereto), input data, or output data. In an embodiment, an instruction, when executed by the processor 120, may cause the electrode performance analysis apparatus 100 to perform operations defined by the instruction.

In an embodiment, the memory 110 may include one or more software (e.g., a first modeling unit 111, an obtaining unit 113, a second modeling unit 115, a verifying unit 117, and/or an analyzing unit 117).

In an embodiment, the processor 120 may include a central processing unit, an application processor, a graphic processing unit, a neural processing unit (NPU), an image signal processor, a sensor hub processor, or a communication processor.

In an embodiment, the processor 120 may execute software (e.g., the first modeling unit 111, the obtaining unit 113, the second modeling unit 115, the verifying unit 117, and/or the analyzing unit 117) to control at least one other component (e.g., a hardware or software component) of the battery diagnosis apparatus 100 connected to the processor 120 and perform various data processing or operations.

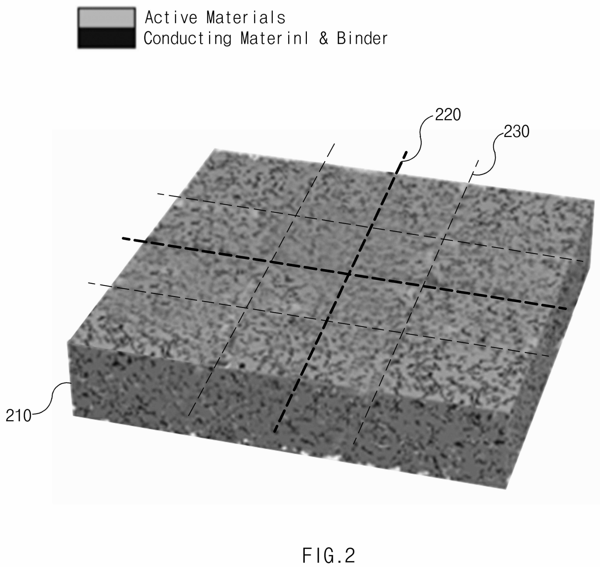

Hereinbelow, referring to FIGS. 2, 3, 4, 5, and 6, a method of 3D modeling an electrode structure and analyzing performance of the modeled electrode structure by the electrode performance analysis apparatus 100 through the first modeling unit 111, the obtaining unit 113, the second modeling unit 115, the verifying unit 117, and/or the analyzing unit 117 will be described.

A secondary battery includes a positive electrode layer, a negative electrode layer, a separator separating the positive electrode layer and the negative electrode layer, and a liquid electrolyte that passes through the separator and connects the positive electrode layer to the negative electrode layer with charges, or includes the positive electrode layer, the negative electrode layer, and a solid electrolyte layer disposed therebetween. Herein, the positive electrode layer may include a positive active material, a conducting material for improving the conductivity of the positive active material, and a binder for connecting the positive active material to the conducting material. The negative electrode layer may include a negative active material, a conducting material for improving the conductivity of the negative active material, and a binder for connecting the negative active material to the conducting material.

The electrode structure described below may mean a positive electrode layer or a negative electrode layer included in the secondary battery, and the electrode performance analysis apparatus 100 may analyze the performance of an electrode by 3D modeling the electrode structure in a virtual world.

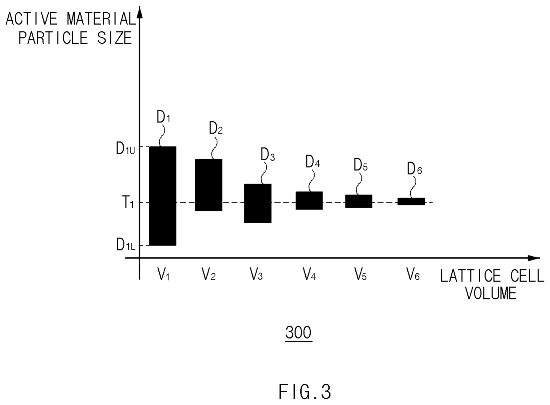

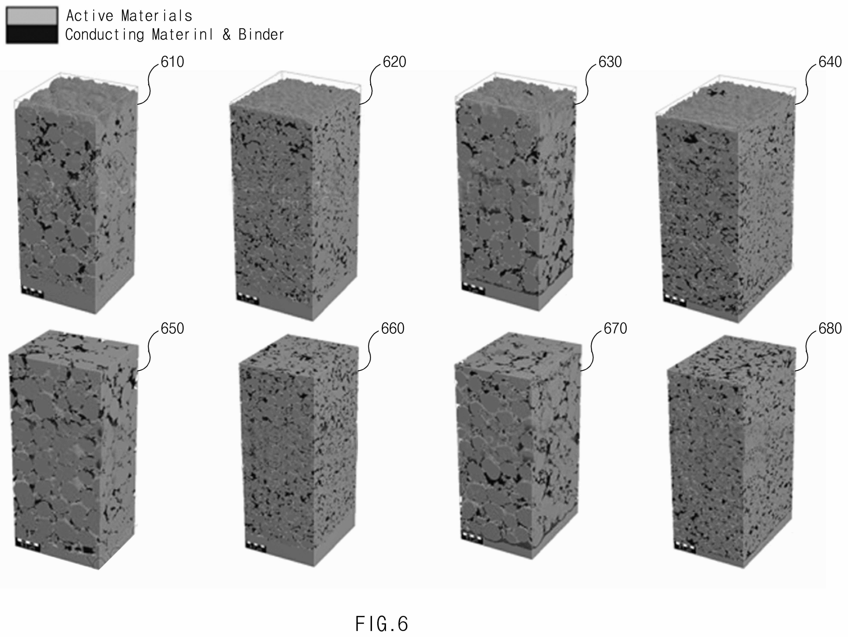

FIG. 2 is a view showing an initial electrode structure that is 3D-modeled by an electrode performance analysis apparatus, according to an embodiment. FIGS. 3, 4, and 5 are graphs for describing an example of determining, by an electrode performance analysis apparatus, a reference lattice cell among a plurality of lattice cells to set an REV, according to an embodiment. FIG. 6 is a view showing a reference electrode structure that is 3D-modeled based on a set REV by an electrode performance analysis apparatus, according to an embodiment.

Referring to FIG. 2, the first modeling unit 111 may 3D-model an initial electrode structure 210. Herein, the initial electrode structure 210 may have a form in which a positive electrode layer or a negative electrode layer of a secondary battery including a positive active material or a negative active material, a conducting material, and a binder is implemented in a virtual world.

According to an embodiment, the first modeling unit 111 may 3D-model the initial electrode structure 210 by using a volume, an active material particle size, and a porosity as variables. Herein, the active material particle size may include an intermediate particle size D50 of a plurality of active materials included in a lattice cell. The porosity may mean a rate of pores other than the active material in the initial electrode structure 210. For example, the first modeling unit 111 may 3D-model the initial electrode structure 210 having a designated volume (e.g., 2.5*10⁷ µm³), a designated active material intermediate particle size (e.g., 10 µm), and a designated porosity (e.g., 20 %).

According to an embodiment, the obtaining unit 113 may obtain a first parameter including at least one of an active material particle size, a porosity, or a filling rate from each of a plurality of lattice cells in the initial electrode structure 210. For example, the plurality of lattice cells may be at least a part of the initial electrode structure 210, and each of the plurality of lattice cells may have the same volume or different volumes.

According to an embodiment, the obtaining unit 113 may extract a plurality of lattice cells from the initial electrode structure 210 through a predetermined scheme.

According to an embodiment, the obtaining unit 113 may divide the initial electrode structure 210 into N parts (N is a natural number) and extract a lattice cell having a volume of 1/N of the initial electrode 210. For example, the obtaining unit 113 may extract a first lattice cell according to a first scheme 220. Herein, the first scheme 220 may divide the initial electrode structure 210 into 4 parts and extract a lattice cell having a volume of 1/4 of the initial electrode structure 210. In another example, the obtaining unit 113 may extract a second lattice cell according to a second scheme 230. Herein, the second scheme 230 may divide the initial electrode structure 210 into 9 parts and extract a lattice cell having a volume of 1/9 of the initial electrode structure 210. As such, the obtaining unit 113 may extract a first lattice cell, a second lattice cell, ..., an N^{th} lattice cell from the initial electrode structure 210 according to the first scheme 220, the second scheme 230, ..., an N^{th} scheme.

However, a scheme for the obtaining unit 113 to extract a plurality of lattice cells from the initial electrode structure 210 is not limited to the foregoing schemes, and the obtaining unit 113 may extract a plurality of lattice cells from the initial electrode structure 210 through various schemes.

The obtaining unit 113 may obtain a first parameter including at least one of an active material particle size, a porosity, or a filling rate from each of the plurality of extracted lattice cells. Herein, the active material particle size may include an intermediate particle size of a plurality of active materials included in a lattice cell. The porosity may mean a rate of pores other than an active material in a lattice cell, and the filling rate may mean a rate of the active material in the lattice cell.

According to an embodiment, the second modeling unit 115 may 3D model a reference electrode structure based on the first parameter obtained by the obtaining unit 113.

According to an embodiment, the second modeling unit 115 may determine a representative elementary volume (REV) capable of representing characteristics of an actual electrode volume based on the first parameter. The second modeling unit 115 may 3D model the reference electrode structure based on the determined REV.

According to an embodiment, the second modeling unit 115 may determine the reference lattice cell among the plurality of lattice cells extracted by the obtaining unit 113 based on the first parameter, and determine a volume of the determined reference lattice cell as an REV.

According to an embodiment, the second modeling unit 115 may identify at least one lattice cell satisfying a designated condition among the plurality of lattice cells. Herein, the designated condition may include at least one of a first condition that the first parameter is within a designated range or a second condition that the first parameter includes a designated value. For example, the designated range may be a range falling within an error of 5 % from a theoretical value, and the designated value may be the theoretical value.

Hereinbelow, referring to FIGS. 3, 4, and 5, an embodiment will be described in which the second modeling unit 115 identifies at least one lattice cell satisfying a designated condition among the plurality of lattice cells.

Referring to FIG. 3, a graph 300 is shown in which an active material intermediate particle size of each of the plurality of lattice cells obtained by the obtaining unit 113 is shown with respect to a volume of a lattice cell.

In the graph 300, an active material particle size distribution D₁, D₂, D₃, D₄, D₅, or D₆ may indicate a distribution of an active material intermediate particle size obtained from lattice cells having a specific volume (e.g., Vi, V₂, V₃, V₄, V₅, or V₆). For example, the first active material particle size distribution Di may indicate a distribution of active material intermediate particle sizes obtained by the obtaining unit 113 from lattice cells having a first volume V₁ among the plurality of lattice cells. In the graph 300, the first active material particle size distribution D₁ may have a minimum particle size D_{1L} which may be a minimum particle size among active material intermediate particle sizes of the lattice cells having the first volume V₁. In addition, the first active material particle size distribution Di may have a maximum particle size D_{1U} which may be a maximum particle size among the active material intermediate particle sizes of the lattice cells having the first volume V₁.

In the graph 300, T₁ may mean a theoretical active material intermediate particle size. For example, T₁ may be an active material intermediate particle size set by the first modeling unit 111 before the initial electrode structure 210 is 3D-modeled. In this case, T₁ may be an active material intermediate particle size of the initial electrode structure 210.

According to an embodiment, the second modeling unit 115 may identify, among the plurality of lattice cells, at least one lattice cell satisfying the first condition that the active material particle size distribution is within the designated range (e.g., a range within an error of 5 % from the theoretical active material intermediate particle size T₁). The second modeling unit 115 may identify that among the plurality of lattice cells, lattice cells having the fourth volume V₄, the fifth volume V₅, or the sixth volume V₆ satisfy the first condition, based on that the fourth active material particle size distribution D₄, the fifth active material particle size distribution D₅, and the sixth active material particle size distribution D₆ are within a range within an error of 5 % from the theoretical active material intermediate particle size Ti.

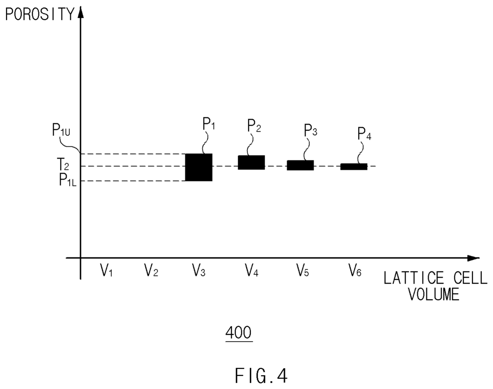

Referring to FIG. 4, a graph 400 is shown in which a porosity of each of the plurality of lattice cells obtained by the obtaining unit 113 is shown with respect to a volume of a lattice cell.

In the graph 400, a porosity distribution P₁, P₂, P₃, or P₄ may indicate a distribution of a porosity obtained from lattice cells having a specific volume (e.g., V₃, V₄, V₅, or V₆). For example, the first porosity distribution P₁ may indicate a distribution of porosities obtained by the obtaining unit 113 from lattice cells having the third volume V₁ among the plurality of lattice cells. In the graph 400, the first porosity distribution P₁ may have a minimum porosity P_{1L} which may be a minimum value among porosities of the lattice cells having the third volume V₃. The first porosity distribution P₁ may have a maximum porosity P_{1U} which may be a maximum value among porosities of the lattice cells having the third volume V₃.

In the graph 400, for lattice cells having the first volume V₁ or the second volume V₂, as a volume of a lattice cell decreases a threshold volume or less, a porosity is 0 or not obtained.

In the graph 400, T₂ may mean a theoretical porosity. For example, T₂ may be a porosity set by the first modeling unit 111 before the initial electrode structure 210 is 3D-modeled. In this case, T₂ may be a porosity of the initial electrode structure 210.

According to an embodiment, the second modeling unit 115 may identify, among the plurality of lattice cells, at least one lattice cell satisfying the first condition that the porosity distribution is within the designated range (e.g., a range within an error of 5 % from the theoretical porosity T₂). The second modeling unit 115 may identify that among the plurality of lattice cells, lattice cells having the third volume V₃, the fourth volume V₄, the fifth volume V₅, or the sixth volume V₆ satisfy the first condition, based on that the first porosity distribution P₁, the second porosity distribution P₂, the third porosity distribution P₃, and the fourth porosity distribution P₄ are within a range within an error of 5 % from the theoretical porosity T₂.

According to an embodiment, the second modeling unit 115 may identify, among the plurality of lattice cells, at least one lattice cell satisfying the second condition that the porosity distribution includes the designated value (e.g., the theoretical porosity T₂). The second modeling unit 115 may identify that among the plurality of lattice cells, lattice cells having the third volume V₃, the fourth volume V₄, the fifth volume V₅, or the sixth volume V₆ satisfy the second condition, based on that the first porosity distribution P₁, the second porosity distribution P₂, the third porosity distribution P₃, and the fourth porosity distribution P₄ include the theoretical porosity T₂.

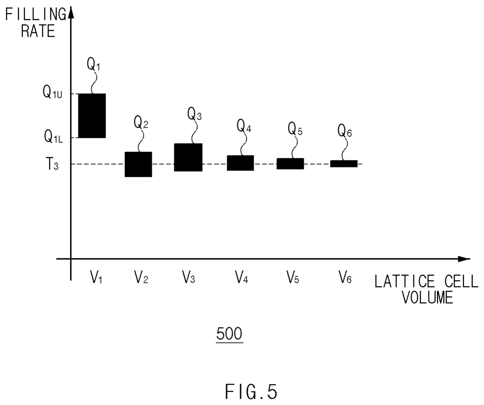

Referring to FIG. 5, a graph 500 is shown in which a filling rate of each of the plurality of lattice cells obtained by the obtaining unit 113 is shown with respect to a volume of a lattice cell.

In the graph 500, a filling rate distribution Q₁, Q₂, Q₃, Q₄, Q₅, or Q₆ may indicate a distribution of a filling rate obtained from lattice cells having a specific volume (e.g., V₁, V₂, V₃, V₄, V₅, or V₆). For example, the first filling rate distribution Q₁ may indicate a distribution of filling rates obtained by the obtaining unit 113 from lattice cells having the first volume V₁ among the plurality of lattice cells. In the graph 500, the first filling rate distribution Q₁ may have a minimum filling rate Q_{1L} which may be a minimum value among filling rates of the lattice cells having the first volume V₁. The first filling rate distribution Q₁ may have a maximum filling rate Q_{1U} which may be a maximum value among filling rates of the lattice cells having the first volume V₁.

In the graph 500, T₃ may mean a theoretical filling rate. For example, T₃ may be a filling rate set by the first modeling unit 111 before the initial electrode structure 210 is 3D-modeled. In this case, T₃ may be a filling rate of the initial electrode structure 210.

According to an embodiment, the second modeling unit 115 may identify, among the plurality of lattice cells, at least one lattice cell satisfying the first condition that the filling rate distribution is within the designated range (e.g., a range within an error of 5 % from the theoretical filling rate T₃). The second modeling unit 115 may identify that among the plurality of lattice cells, lattice cells having the second volume V₂, the third volume V₃, the fourth volume V₄, the fifth volume V₅, or the sixth volume V₆ satisfy the first condition, based on that the second filling rate distribution Q₂, the third filling rate distribution Q₃, the fourth filling rate distribution Q₄ , the fifth filling rate distribution Q₅, and the sixth filling rate distribution Q₆ are within a range within an error of 5 % from the theoretical filling rate T₃.

According to an embodiment, the second modeling unit 115 may identify, among the plurality of lattice cells, at least one lattice cell satisfying the second condition that the filling rate distribution includes the designated value (e.g., the theoretical filling rate T₃). The second modeling unit 115 may identify that among the plurality of lattice cells, lattice cells having the second volume V₂, the third volume V₃, the fourth volume V₄, the fifth volume V₅, or the sixth volume V₆ satisfy the second condition, based on that the second filling rate distribution Q₂, the third filling rate distribution Q₃, the fourth filling rate distribution Q₄, the fifth filling rate distribution Q₅, and the sixth filling rate distribution Q₆ include the theoretical filling rate T₃.

According to an embodiment, the second modeling unit 115 may identify at least one lattice cell having at least one of an active material particle size, a porosity, or a filling rate, which satisfies the first condition and/or the second condition, among the plurality of lattice cells, and determine a lattice cell having the minimum volume among the at least one identified lattice cell as a reference lattice cell.

According to an embodiment, when the second modeling unit 115 determines the reference lattice cell based on the active material particle size, the second modeling unit 115 may determine a lattice cell having the fourth volume V₄ that is the minimum volume among the at least one identified lattice cell as the reference lattice cell, and determine the fourth volume V₄ as an REV.

According to an embodiment, when the second modeling unit 115 determines the reference lattice cell based on the porosity, the second modeling unit 115 may determine a lattice cell having the third volume V₃ that is the minimum volume among the at least one identified lattice cell as the reference lattice cell, and determine the third volume V₃ as an REV.

According to an embodiment, when the second modeling unit 115 determines the reference lattice cell based on the filling rate, the second modeling unit 115 may determine a lattice cell having the second volume V₂ that is the minimum volume among the at least one identified lattice cell as the reference lattice cell, and determine the second volume V₂ as an REV.

According to an embodiment, when the second modeling unit 115 determines the reference lattice cell based on the active material particle size, the porosity, and the filling rate, the second modeling unit 115 may identify lattice cells having the fourth volume V₄, the fifth volume V₅, or the sixth volume V₆ as at least one lattice cell. This is because the identified lattice cells have active material particle sizes, porosities, and filling rates that satisfy the first condition and/or the second condition. The second modeling unit 115 may determine the lattice cell having the fourth volume V₄ that is the minimum volume among the at least one identified lattice cell as the reference lattice cell, and determine the fourth volume V₄ as an REV.

Referring to FIG. 6, the second modeling unit 115 may 3D-model a reference electrode structure 610, 620, 630, 640, 650, 660, 670, or 680 based on the determined REV. Herein, the reference electrode structures 610, 620, 630, 640, 650, 660, 670, and 680 may have the same volume as the REV.

According to an embodiment, the second modeling unit 115 may 3D-model the reference electrode structure 610, 620, 630, 640, 650, 660, 670, or 680 by using, as a variable, an active material particle shape, an active material particle size, a manufacturing process, and/or a degradation degree of an electrode. For example, the first reference electrode structure 610, the third reference electrode structure 630, the fifth reference electrode structure 650, and the seventh reference electrode structure 670 may have a first active material particle shape and a first active material particle size, and the second reference electrode structure 620, the fourth reference electrode structure 640, the sixth reference electrode structure 660, and the eighth reference electrode structure 680 may have a second active material particle shape and a second active material particle size. The first reference electrode structure 610, the second reference electrode structure 620, the fifth reference electrode structure 650, and the sixth reference electrode structure 660 may be 3D-modeled electrodes after manufactured by a first manufacturing process, and the third reference electrode structure 630, the fourth reference electrode structure 640, the seventh reference electrode structure 670, and the eighth reference electrode structure 680 may be 3D-modeled electrodes after manufactured by a second manufacturing process. Last, the first reference electrode structure 610, the second reference electrode structure 620, the third reference electrode structure 630, and the fourth reference electrode structure 640 may be 3D-modeled electrodes of an initial electrode, and the fifth reference electrode structure 650, the sixth reference electrode structure 660, the seventh reference electrode structure 670, and the eighth reference electrode structure 680 may be 3D-modeled electrodes of electrodes degraded by a designated level.

According to an embodiment, the verifying unit 117 may verify the reliability of the reference electrode structure based on a domain volume/particle volume (D/P) obtained by dividing a volume of the reference electrode structure by a volume of an active material in the reference electrode structure. For example, the volume of the active material in the reference electrode structure may be calculated based on an intermediate particle size of the active material of the reference electrode structure.

According to an embodiment, the verifying unit 117 may verify the reliability of the reference electrode structure by comparing the number of active material particles in the reference electrode structure with the D/P. For example, the verifying unit 117 may verify that the reference electrode structure is reliable when the number of active material particles in the reference electrode structure is greater than the D/P. In another example, the verifying unit 117 may verify that the reference electrode structure is not reliable when the number of active material particles in the reference electrode structure is less than the D/P.

According to an embodiment, the analyzing unit 119 may analyze the performance of the reference electrode structure. According to an embodiment, the analyzing unit 119 may analyze the performance of the reference electrode structure when the verifying unit 117 verifies that the reference electrode structure is reliable.

According to an embodiment, the analyzing unit 119 may analyze performance related to at least one of an electrical conductivity, an ionic conductivity, or an active material reaction area of the reference electrode structure.

According to an embodiment, the analyzing unit 119 may analyze performance related to the electrical conductivity of the reference electrode structure by calculating filling rates of a conducting material and a binder in the reference electrode structure, dispersion degrees of the conducting material and the binder, or a resistance of the reference electrode structure. According to an embodiment, the analyzing unit 119 may analyze a trend in change of the electrical conductivity with respect to conditions of active material particle shapes, active material particle sizes, manufacturing processes, and degradation degrees of the plurality of reference electrode structures 610, 620, 630, 640, 650, 660, 670, and 680 that are 3D modeled by the second modeling unit 115. For example, the analyzing unit 119 may identify that a gradient of the filling rates of the conducting material and the binder in an electrode thickness direction decreases when a drying process is excluded from an electrode manufacturing process. In another example, the analyzing unit 119 may identify that the dispersion degrees of the conducting material and the binder are improved as the active material particle size decreases. In another example, the analyzing unit 119 may identify a trend in change of the resistance of the reference electrode structure with respect to the electrode manufacturing process.

According to an embodiment, the analyzing unit 119 may analyze performance related to the ionic conductivity of the reference electrode structure by calculating a shape, a size, a density, and an orientation of pores in the reference electrode structure, and an ionic curvature of the reference electrode structure. According to an embodiment, the analyzing unit 119 may analyze a trend in change of the ionic conductivity with respect to conditions of active material particle shapes, active material particle sizes, manufacturing processes, and degradation degrees of the plurality of reference electrode structures 610, 620, 630, 640, 650, 660, 670, and 680 that are 3D modeled by the second modeling unit 115. For example, the analyzing unit 119 may identify that the size of pores changes with an active material particle shape and an active material particle size. In another example, the analyzing unit 119 may identify a difference in pore density with respect to degradation of the reference electrode structure. In another example, the analyzing unit 119 may identify that a pore density and an orientation of the reference electrode structure affect an ionic curvature.

According to an embodiment, the analyzing unit 119 may analyze an active material reaction area of the reference electrode structure by calculating a specific surface area between an active material and a pore of the reference electrode structure, a specific surface area between the active material and the binder, and a specific surface area among the active material, the pore, and the binder. According to an embodiment, the analyzing unit 119 may analyze a trend in change of the active material reaction area with respect to conditions of active material particle shapes, active material particle sizes, manufacturing processes, and degradation degrees of the plurality of reference electrode structures 610, 620, 630, 640, 650, 660, 670, and 680 that are 3D modeled by the second modeling unit 115. For example, the analyzing unit 119 may identify that a specific surface area value decreases for the degraded reference electrode structure.

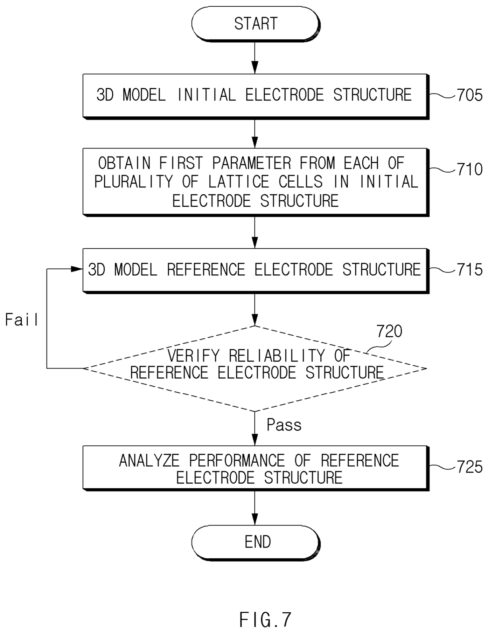

FIG. 7 is a flowchart of operations of an electrode performance analysis apparatus according to an embodiment. FIG. 7 will be described using components of FIG. 1 (e.g., the electrode performance analysis apparatus 100).

The embodiment shown in FIG. 7 may be an example, and an order of operations according to various embodiments of the present disclosure may be different from that shown in FIG. 7, and some operations shown in FIG. 7 may be omitted, the order of the operations may be changed, or the operations may be merged. For example, operation 720 may be omitted from FIG. 7.

In operation 705, the electrode performance analysis apparatus 100 may 3D model the initial electrode structure. Herein, the initial electrode structure may have a form in which a positive electrode layer or a negative electrode layer of a secondary battery including a positive active material or a negative active material, a conducting material, and a binder is implemented in a virtual world.

According to an embodiment, the electrode performance analysis apparatus 100 may 3D model the initial electrode structure by using a volume, an active material particle size, and a porosity as variables. Herein, the active material particle size may include an intermediate particle size D50 of a plurality of active materials included in a lattice cell. The porosity may mean a rate of pores other than the active material in the initial electrode structure. For example, the electrode performance analysis apparatus 100 may 3D model the initial electrode structure having a designated volume (e.g., 2.5*10⁷ µm³), a designated active material intermediate particle size (e.g., 10 µm), and a designated porosity (e.g., 20 %).

In operation 710, the electrode performance analysis apparatus 100 may obtain a first parameter including at least one of an active material particle size, a porosity, or a filling rate from each of a plurality of lattice cells in the initial electrode structure 210 that is 3D modeled in operation 705. For example, the plurality of lattice cells may be at least a part of the initial electrode structure, and each of the plurality of lattice cells may have the same volume or different volumes.

According to an embodiment, the electrode performance analysis apparatus 100 may extract a plurality of lattice cells from the initial electrode structure through a predetermined scheme.

According to an embodiment, the electrode performance analysis apparatus 100 may divide the initial electrode structure into N parts (N is a natural number) and extract a lattice cell having a volume of 1/N of the initial electrode. For example, the electrode performance analysis apparatus 100 may extract a first lattice cell according to a first scheme. Herein, the first scheme may divide the initial electrode structure into 4 parts and extract a lattice cell having a volume of 1/4 of the initial electrode structure. In another example, the electrode performance analysis apparatus 100 may extract a second lattice cell according to a second scheme. Herein, the second scheme may divide the initial electrode structure 210 into 9 parts and extract a lattice cell having a volume of 1/9 of the initial electrode structure 210. As such, the electrode performance analysis apparatus 100 may extract a first lattice cell, a second lattice cell, ..., an N^{th} lattice cell from the initial electrode structure according to the first scheme, the second scheme, ..., the N^{th} scheme.

However, a scheme for the electrode performance analysis apparatus 100 to extract a plurality of lattice cells from the initial electrode structure is not limited to the foregoing schemes, and the electrode performance analysis apparatus 100 may extract a plurality of lattice cells from the initial electrode structure through various schemes.

The electrode performance analysis apparatus 100 may obtain a first parameter including at least one of an active material particle size, a porosity, or a filling rate from each of the plurality of extracted lattice cells. Herein, the active material particle size may include an intermediate particle size of a plurality of active materials included in a lattice cell. The porosity may mean a rate of pores other than an active material in a lattice cell, and the filling rate may mean a rate of the active material in the lattice cell.

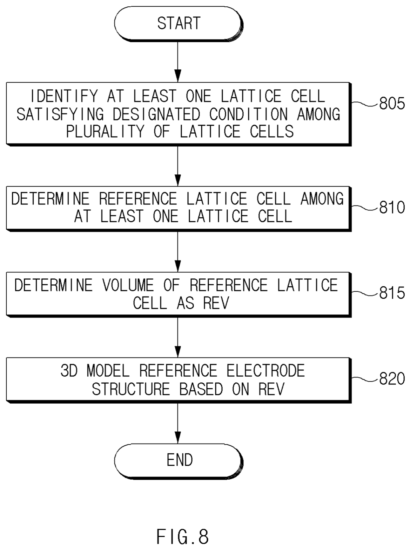

In operation 715, the electrode performance analysis apparatus 100 may 3D model the reference electrode structure. According to an embodiment, the electrode performance analysis apparatus 100 may 3D model the reference electrode structure based on the first parameter obtained in operation 710. Operation 715, performed by the electrode performance analysis apparatus 100, of 3D modeling the reference electrode structure will be described in more detail with reference to FIG. 8 below.

In operation 720, the electrode performance analysis apparatus 100 may verify the reliability of the reference electrode structure that is 3D modeled in operation 715. According to an embodiment, the electrode performance analysis apparatus 100 may verify the reliability of the reference electrode structure based on a D/P obtained by dividing a volume of the reference electrode structure by a volume of an active material in the reference electrode structure. For example, the volume of the active material in the reference electrode structure may be calculated based on an intermediate particle size of the active material of the reference electrode structure.

According to an embodiment, the electrode performance analysis apparatus 100 may verify the reliability of the reference electrode structure by comparing the number of active material particles in the reference electrode structure with the D/P. For example, the electrode performance analysis apparatus 100 may verify that the reference electrode structure is reliable when the number of active material particles in the reference electrode structure is greater than the D/P. In another example, the electrode performance analysis apparatus 100 may verify that the reference electrode structure is not reliable when the number of active material particles in the reference electrode structure is less than the D/P.

In operation 720, when verifying that the reference electrode structure is not reliable ('Fail') in operation 720, the electrode performance analysis apparatus 100 may perform operation 715 again.

In operation 720, when verifying that the reference electrode structure is reliable ('Pass') in operation 720, the electrode performance analysis apparatus 100 may analyze the performance of the reference electrode structure in operation 725.

According to an embodiment, the electrode performance analysis apparatus 100 may analyze performance related to at least one of an electrical conductivity, an ionic conductivity, or an active material reaction area of the reference electrode structure.

According to an embodiment, the electrode performance analysis apparatus 100 may analyze performance related to the electrical conductivity of the reference electrode structure by calculating filling rates of a conducting material and a binder in the reference electrode structure, dispersion degrees of the conducting material and the binder, or a resistance of the reference electrode structure. According to an embodiment, the electrode performance analysis apparatus 100 may analyze a trend in change of the electrical conductivity with respect to conditions of active material particle shapes, active material particle sizes, manufacturing processes, and degradation degrees of a plurality of reference electrode structures that are 3D modeled in operation 715. For example, the electrode performance analysis apparatus 100 may identify that a gradient of the filling rates of the conducting material and the binder in an electrode thickness direction decreases when a drying process is excluded from an electrode manufacturing process. In another example, the electrode performance analysis apparatus 100 may identify that the dispersion degrees of the conducting material and the binder are improved as the active material particle size decreases. In another example, the electrode performance analysis apparatus 100 may identify a trend in change of the resistance of the reference electrode structure with respect to the electrode manufacturing process.

According to an embodiment, the electrode performance analysis apparatus 100 may analyze performance related to the ionic conductivity of the reference electrode structure by calculating a shape, a size, a density, and an orientation of pores in the reference electrode structure, and an ionic curvature of the reference electrode structure. According to an embodiment, the electrode performance analysis apparatus 100 may analyze a trend in change of the ionic conductivity with respect to the conditions of active material particle shapes, active material particle sizes, manufacturing processes, and degradation degrees of a plurality of reference electrode structures that are 3D modeled in operation 715. For example, the electrode performance analysis apparatus 100 may identify that the size of pores changes with an active material particle shape and an active material particle size. In another example, the electrode performance analysis apparatus 100 may identify a difference in pore density with respect to degradation of the reference electrode structure. In another example, the electrode performance analysis apparatus 100 may identify that a pore density and an orientation of the reference electrode structure affect an ionic curvature.

According to an embodiment, the electrode performance analysis apparatus 100 may analyze an active material reaction area of the reference electrode structure by calculating a specific surface area between an active material and a pore of the reference electrode structure, a specific surface area between the active material and the binder, and a specific surface area among the active material, the pore, and the binder. According to an embodiment, the electrode performance analysis apparatus 100 may analyze a trend in change of the active material reaction area with respect to the conditions of active material particle shapes, active material particle sizes, manufacturing processes, and degradation degrees of a plurality of reference electrode structures that are 3D modeled in operation 715. For example, the electrode performance analysis apparatus 100 may identify that a specific surface area value decreases for the degraded reference electrode structure.

FIG. 8 is a flowchart of operations of an electrode performance analysis apparatus according to an embodiment. FIG. 8 will be described using components of FIG. 1 (e.g., the electrode performance analysis apparatus 100).

The embodiment shown in FIG. 8 may be an example, and an order of operations according to various embodiments of the present disclosure may be different from that shown in FIG. 8, and some operations shown in FIG. 8 may be omitted, the order of the operations may be changed, or the operations may be merged.

In operation 805, the electrode performance analysis apparatus 100 may identify at least one lattice cell satisfying a designated condition among the plurality of lattice cells. Herein, the designated condition may include at least one of a first condition that the first parameter is within a designated range or a second condition that the first parameter includes a designated value. For example, the designated range may be a range falling within an error of 5 % from a theoretical value, and the designated value may be the theoretical value.

In operation 810, the electrode performance analysis apparatus 100 may determine a reference lattice cell among at least one lattice cells. According to an embodiment, the electrode performance analysis apparatus 100 may determine a lattice cell having the minimum volume among the at least one lattice cells, as the reference lattice cell.

In operation 815, the electrode performance analysis apparatus 100 may determine a volume of the reference lattice cell as an REV capable of representing the characteristics of the actual electrode volume.

In operation 820, the electrode performance analysis apparatus 100 may 3D model the reference electrode structure based on the REV determined in operation 815. According to an embodiment, the electrode performance analysis apparatus 100 may 3D model the reference electrode structure by using an active material particle shape, an active material particle size, a manufacturing process, and/or an electrode degradation degree as variables.

Terms such as "include", "constitute" or "have" described above may mean that the corresponding component may be inherent unless otherwise stated, and thus should be construed as further including other components rather than excluding other components. All terms including technical or scientific terms have the same meanings as those generally understood by those of ordinary skill in the art to which the embodiments disclosed herein pertain, unless defined otherwise. The terms used generally like terms defined in dictionaries should be interpreted as having meanings that are the same as the contextual meanings of the relevant technology and should not be interpreted as having ideal or excessively formal meanings unless they are clearly defined in the present document.

## Claims

1. An electrode performance analysis apparatus comprising:
a first modeling unit configured to three-dimensionally (3D) model an initial electrode structure;
an obtaining unit configured to obtain a first parameter comprising at least one of an active material particle size, a filling rate or a filling rate from each of a plurality of lattice cells in the initial electrode structure;
a second modeling unit configured to 3D model a reference electrode structure based, at least in part, on the first parameter; and
an analyzing unit configured to analyze performance of the reference electrode structure.

2. The electrode performance analysis apparatus of claim 1, wherein the first modeling unit is further configured to 3D model the initial electrode structure using variables corresponding to a volume, the active material particle size, and a filling rate .

3. The electrode performance analysis apparatus of claim 1, wherein the second modeling unit is further configured to:
determine a representative elementary volume (REV) based on the first parameter; and
3D model the reference electrode structure based, at least in part, on the REV.

4. The electrode performance analysis apparatus of claim 3, wherein the second modeling unit is further configured to:
determine a reference lattice cell among the plurality of lattice cells based on the first parameter; and
determine a volume of the reference lattice cell as the REV.

5. The electrode performance analysis apparatus of claim 4, wherein the second modeling unit is further configured to:
identify one or more lattice cells satisfying a designated condition among the plurality of lattice cells; and
determine a lattice cell having a minimum volume among the one or more lattice cells as the reference lattice cell;
wherein the designated condition comprises at least one of: a) a first condition that evaluates whether the first parameter is within a designated range; b) or a second condition that evaluates whether the first parameter comprises a designated value.

6. The electrode performance analysis apparatus of claim 1, further comprising a verifying unit configured to verify reliability of the reference electrode structure based on a domain volume/particle volume (D/P) value obtained by dividing the volume of the reference electrode structure by a volume of an active material in the reference electrode structure.

7. The electrode performance analysis apparatus of claim 6, wherein the verifying unit is further configured to verify that the reference electrode structure is reliable in response to determining that a number of active material particles in the reference electrode structure is greater than the D/P.

8. The electrode performance analysis apparatus of claim 1, wherein the analyzing unit is further configured to analyze performance related to at least one of: an electrical conductivity, an ionic conductivity, or an active material reaction area of the reference electrode structure.

9. An electrode performance analysis method comprising:
three-dimensionally (3D) modeling an initial electrode structure;
obtaining a first parameter comprising at least one of an active material particle size, a filling rate, or a filling rate from each of a plurality of lattice cells in the initial electrode structure;
3D modeling a reference electrode structure based, at least in part, on the first parameter; and
analyzing performance of the reference electrode structure.

10. The electrode performance analysis method of claim 9, wherein the 3D modeling of the initial electrode structure comprises:
determining a representative elementary volume (REV) based on the first parameter; and
3D modeling the reference electrode structure based, at least in part, on the REV.

11. The electrode performance analysis method of claim 10, wherein the determining of the REV comprises:
determining a reference lattice cell among the plurality of lattice cells based on the first parameter; and
determining a volume of the reference lattice cell as the REV.

12. The electrode performance analysis method of claim 11, wherein the determining of the reference lattice cell comprises:
identifying one or more lattice cells satisfying a designated condition among the plurality of lattice cells; and
determining a lattice cell having a minimum volume among the one or more lattice cells as the reference lattice cell,
wherein the designated condition comprises at least one of: a) a first condition that evaluates whether the first parameter is within a designated range; b) or a second condition that evaluates whether the first parameter comprises a designated value.

13. The electrode performance analysis method of claim 9, further comprising:
verifying reliability of the reference electrode structure based on a domain volume/particle volume (D/P) value obtained by dividing the volume of the reference electrode structure by a volume of an active material in the reference electrode structure.

14. The electrode performance analysis method of claim 13, wherein the verifying the reliability of the reference electrode structure comprises verifying that the reference electrode structure is reliable in response to determining that a number of active material particles in the reference electrode structure is greater than the D/P.

15. The electrode performance analysis method of claim 9, wherein analyzing the performance of the reference electrode structure comprises analyzing performance related to at least one of: an electrical conductivity, an ionic conductivity, or an active material reaction area of the reference electrode structure.
